Europäisches Patentamt

(19) European Patent Office

Office européen des brevets

(11) Numéro de publication: **0 002 995**
**A1**

(12) # DEMANDE DE BREVET EUROPEEN

(21) Numéro de dépôt: **78400263.6**

(22) Date de dépôt: **26.12.78**

(51) Int. Cl.²: **F 03 B 13/10, F 03 B 17/06**

(30) Priorité: **03.01.78 FR 7800031**

(71) Demandeur: **Lestage, Pierre, 5, Avenue de Cluny, F-94100 Saint Maur des Fosses (FR)**

(43) Date de publication de la demande: **11.07.79 Bulletin 79/14**

(72) Inventeur: **Lestage, Pierre, 5, Avenue de Cluny, F-94100 Saint Maur des Fosses (FR)**

(84) Etats contractants désignés: **DE GB IT**

(54) **Dispositif permettant de capter l'énergie cinétique des courants marins et celle des courants fluviaux pour produire de l'électricité.**

(57) La présente invention a pour objet de créer un dispositif utilisant les courants marins et les courants fluviaux, comme énergie, pour produire de l'électricité, au moyen d'une turbine, ou de plusieurs turbines du type «bulbe».

Ce dispositif est essentiellement constitué par:
- un bâti (1) comportant des caissons étanches (2), lui permettant de flotter, d'être immergé, ou d'être remis à flot
- un capteur hydraulique (5), circulaire, ou partiellement circulaire convergeant vers un venturi (8)
- une turbine (9), du type «bulbe», dont les pales tournent à l'intérieur du venturi (8)
- un diffuseur (10) disposé à la sortie du capteur (5).

Cet ensemble est destiné, suivant le type du dispositif envisagé, à être immergé profondément sur un fond de mer pour capter les courants, tous azimuts, giratoires, alternatifs et apériodiques, ou encore dans le lit d'un cours d'eau (aux eaux vives) pour capter les courants de ce dernier.

- 1 -

Dispositif permettant de capter l'énergie cinétique des courants marins et celle des courants fluviaux pour produire de l'électricité.

La présente invention concerne un dispositif permettant de capter l'énergie cinétique : $\frac{v^2}{2\,g}$ des courants marins, (tous azimuts), et des courants fluviaux pour produire de l'électricité, au moyen d'une ou de plusieurs turbines du type " bulbe ".

Cette invention diffère des projets déjà connus, se rapportant au problème de l'utilisation de l'énergie des courants, ou des marées, surtout par sa conception, sa contexture, sa mise en oeuvre, et son mode d'exploitation.

La réalisation du dispositif envisagé est basée sur l'utilisation d'ajutages coniques, circulaires, ou partiellement circulaires, formant un faisceau de canaux convergents vers un venturi, et également, sur l'application du théorème de Bernoulli, relatif à la variation des puissances vives dans les eaux en mouvement. Celui-ci met en évidence l'effet venturi provoqué par l'augmentation de la vitesse de la masse liquide du courant marin ou fluvial, pendant la traversée des canaux convergents et du venturi, et agissant, en dernier lieu, sur les pales de la turbine, pour faire tourner son alternateur.

Ainsi, ce dispositif met en oeuvre un faisceau de canaux, jouant le rôle d'un capteur de courants, et une turbine formant un ensemble incorporé à un bati. Cet ensemble est conçu de façon telle, qu'il puisse, suivant le dispositif envisagé, être immergé, soit, profondément sur des fonds marins, hors des effets de la houle, près des côtes, et qu'il puisse capter le plus grand nombre de courants périodiques (giratoires et alternatifs) et apériodiques, ou encore, soit dans le lit d'un cours d'eau, ou d'un fleuve, soumis à l'action des courants violents.

Par ailleurs, cette invention se caractérise, surtout, par une robustesse du capteur hydraulique, qui n'exige aucun entretien, et par une mise en œuvre et une exploitation sous-marine pouvant facilement être maitrisées.

Quant au fonctionnement de la turbine équipant le venturi du capteur, il est entièrement automatique au gré des courants.

L'avantage de cette invention devrait permettre de produire de l'électricité à bas prix, en utilisant une énergie inépuisable, fournie par les courants des torrents, des rivières (aux eaux vives), des fleuves, et des océans.

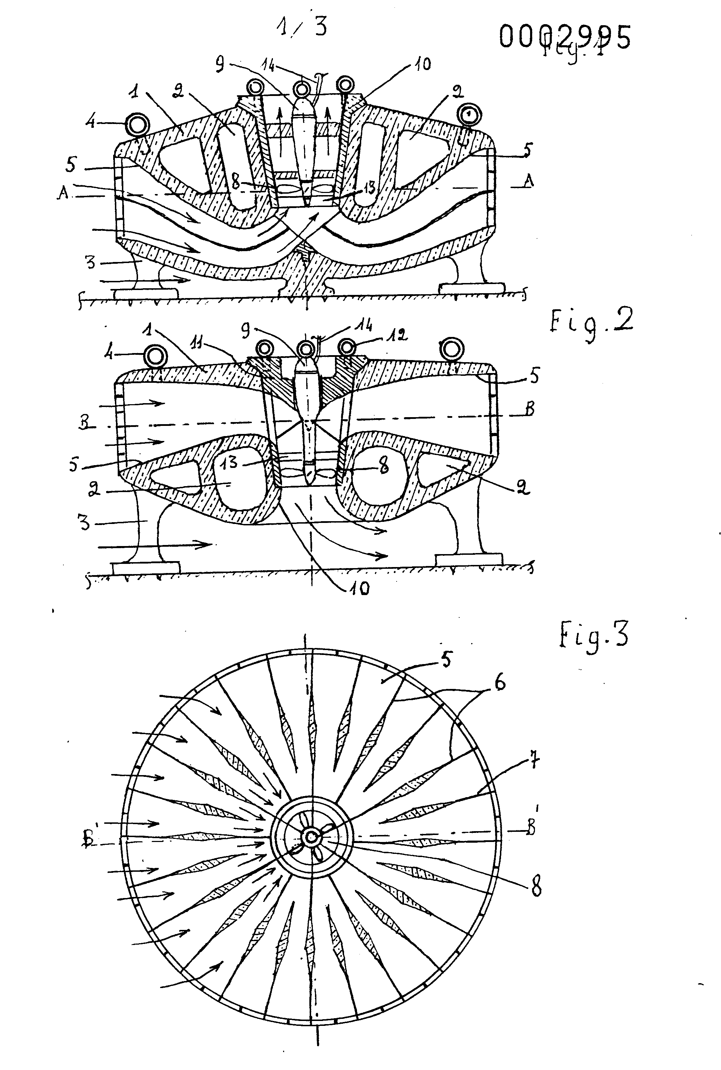

Selon un mode de réalisation, le plus simple, parmi les dispositifs prévus pour capter les courants marins, il est envisagé de créer un groupe de production d'électricité, à une turbine. Ce groupe est représenté par les dessins figures 1, 2 et 3. Celui-ci est essentiellement constitué par :

- un bati en béton 1, ou en autre matériau, de forme cylindrique (rappelant le profil d'une soucoupe) comportant des caissons étanches 2 (Water ballasts), lui permettant de flotter, d'être immergé, ou d'être remis à flot, en remplissant d'eau les caissons, ou en les vidant comme cela se passe dans le sous-marin.

  Ce bati comporte en outre, plusieurs pieds 3, au moyen desquels il repose sur le fond marin, et également, il est pourvu d'anneaux 4, destinés à fixer des élingues pour faciliter les manœuvres de son immersion, ou de sa remise à flot, au moyen d'un portique de marine.

- un capteur hydraulique 5, circulaire, tous azimuts, et convergent vers son centre, aménagé à l'intérieur et sur le pourtour du bati 1.

  Ce capteur est destiné à capter les courants marins. Il est compartimenté verticalement, en secteurs circulaires de trente degrés, déterminant des canaux convergents 6. Chaque canal ainsi défini, est par ailleurs, compartimenté en secteurs de quinze degrés par des parois verticales 7, destinées à modifier l'angle de convergence de chaque ajutage conique 6, de façon à créer des étages de vitesses différentes, pour les courants traversant ces ajutages. Le rapport prévu des vitesses des courants entre l'entrée de ces canaux et leur sortie, est de l'ordre de un à sept environ.

De plus, chaque canal 6, converge vers le centre du bati 1, et débouche dans un venturi commun 8. Ce venturi 8, a la particularité d'être recourbé à quatre vingt dix degrés par rapport à l'entrée des canaux. Quant à sa sortie, elle est orientée soit vers le haut, figure 1, ou soit vers le bas, figure 2, suivant le modèle du dispositif que l'on se propose de réaliser.

- une turbine 9, du type " bulbe ", disposée verticalement en position centrale du diffuseur 10, de façon que ses pales puissent tourner à l'intérieur du venturi 8, figure 1, ou encore, disposée verticalement comme l'indique la figure 2.

Dans ce dernier cas, la turbine fait corps avec son enveloppe 11, laquelle, ainsi que la turbine sont dotées d'anneaux 12, servant à accrocher des élingues pour les opérations de sa mise en oeuvre, ou de son remplacement, au moyen d'un portique de marine.

Cette turbine en plus de son alternateur, est équipée des dispositifs de service et de sécurité, en particulier, d'un coupe-circuit à commande manuelle et à commande télécommandée, à partir de la côte.
- un distributeur fixe 13, destiné au fonctionnement normal de la turbine, au gré des courants, dès que la vitesse de ceux-ci est suffisante.
- un câble électrique sous-marin 14, qui relie l'alternateur de la turbine au transformateur situé sur la côte.

Dans la réalisation indiquée sur la figure 2, la sortie du venturi 8 est orientée vers le bas, ainsi que celle du diffuseur 10. Dans cette disposition la veine liquide sortant du venturi 8 et traversant le diffuseur 10 est d'abord orientée vers le fond de mer, puis déviée de sa trajectoire par le courant passant sous le dessous du bati 1.

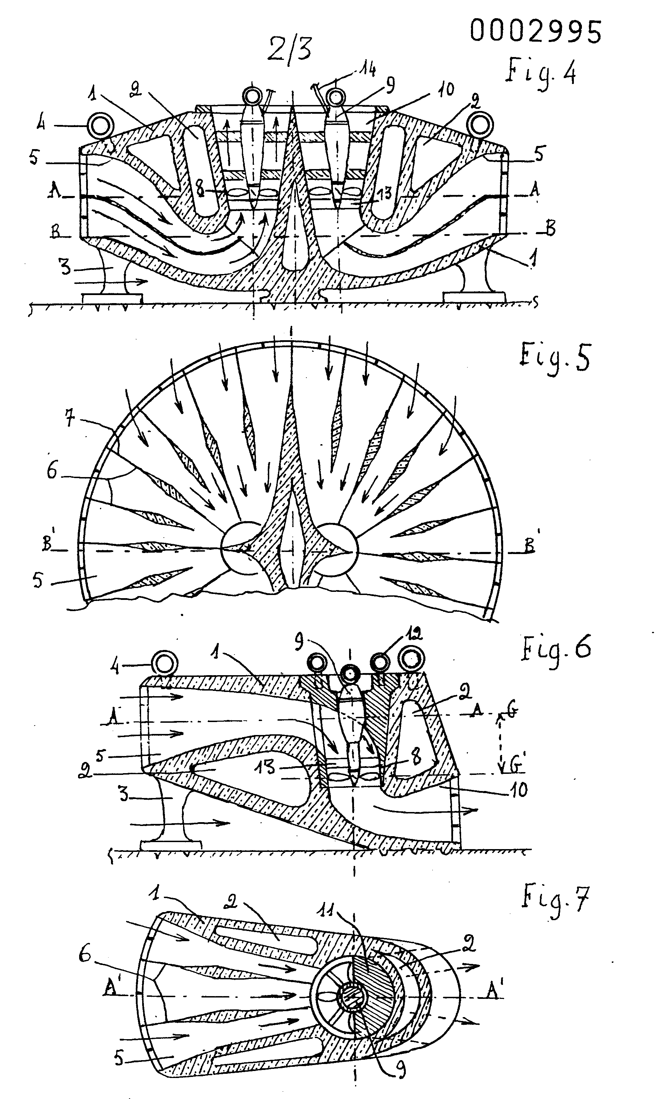

Selon un autre mode de réalisation, il est également envisagé de créer un autre type d'unité de production d'électricité à deux turbines. Celles-ci étant placées en position centrale du bati 1, comme cela est indiqué sur les figures 4 et 5. Cette version à deux turbines a la particularité de présenter face au courant marin, une

- 4 -

0002995

plus grande surface de captage, lorsque l'axe des deux turbines se trouve placé perpendiculairement à la direction de ceux-ci. Or lorsque cette condition se trouve remplie, la production d'électricité est susceptible d'augmenter sensiblement. Aussi, compte tenu de ces caractéristiques, la version à deux turbines, tout en ayant la possibilité de capter les courants giratoires, semble bien adaptée pour capter les courants alternatifs, circulant dans des directions bien définies.

Selon un autre mode de réalisation, il est prévu de créer un autre type de dispositif, destiné à capter les courants fluviaux.

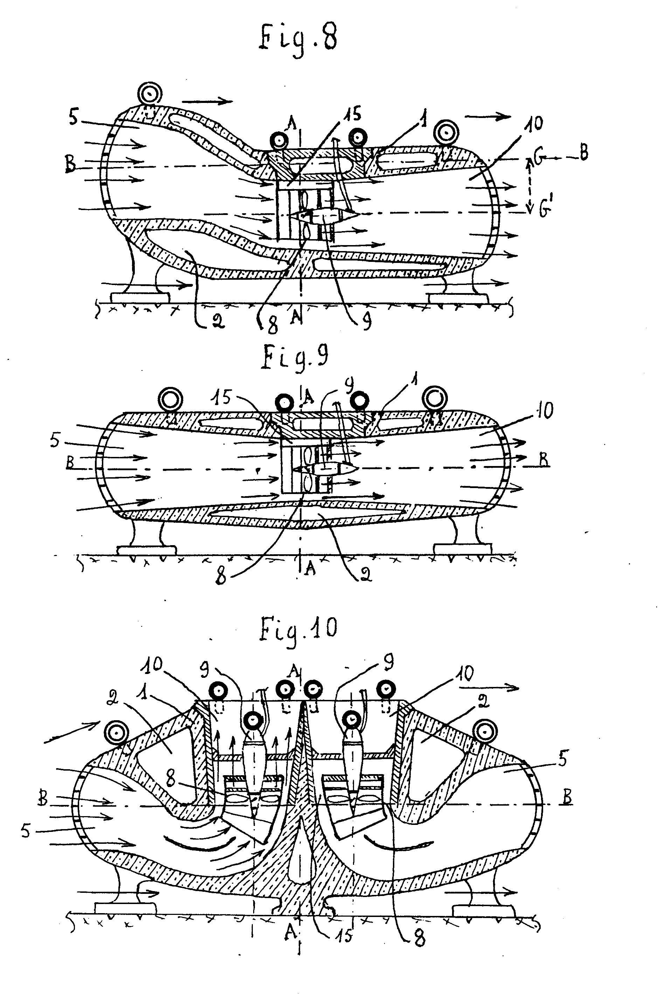

Ce dispositif est représenté sur les figures 6 et 7. Il est conçu suivant les mêmes principes que ceux utilisés pour la réalisation des versions déjà citées. Il utilise les mêmes moyens, mais plus simplifiés, en particulier, le capteur hydraulique 5, ne comporte qu'une entrée réduite à une seule direction, c'est-à-dire, à celle du sens d'om vient le courant fluvial. Les canaux 6 sont réduits au nombre de trois. Quant à la turbine 9, elle est placée à l'intérieur du venturi 8, de façon telle que le plan du centre de gravité de la veine liquide traversant le venturi et agissant sur les pales de la turbine se trouve placé en dessous du plan du centre de gravité de la veine liquide traversant la section du capteur, comme d'ailleurs, cela a été envisagé pour le dispositif cité ci-dessus et représenté sur la figure 2. Pour ce qui concerne le diffuseur 10, celui-ci est placé en dessous des pales de la turbine 9, et il est orienté dans une direction opposée à celle de l'entrée de la section du capteur 5.

Selon d'autres variantes du dispositif destiné à capter les courants fluviaux, et de celui destiné à capter les courants marins alternatifs, il est prévu également de réaliser d'autres dispositifs, représentés par les figures 8 et 9. Le dispositif de la figure 8 diffère du précédent dispositif décrit ci-dessus, en ce que la turbine 9 est placée à l'intérieur et dans l'entrée du diffuseur 10, de façon telle, que la hauteur qui sépare le plan du centre de gravité (G) de l'entrée du capteur 5, de celui du plan du centre de gravité (G'), passant par l'axe de la turbine 9, soit la plus grande possible, cela dans le but d'augmenter la charge de la veine liquide, agissant sur les pales de la turbine 9. Ce type de dispositif est surtout envisagé pour être immergé dans le lit d'un fleuve relativement profond. En ce qui concerne le dispositif représenté par la figure 9, celui-ci est destiné surtout à être immergé dans le lit des rivières, peu profondes, du type torrent. Il se caractérise en ce que, l'entrée du capteur 5, et la sortie du diffuseur 10, sont disposées dans le bati 1, de façon diamétralement opposée, sur le même plan, et dans l'axe de la turbine 9.

Ce dernier dispositif offre la possibilité, en outre, de pouvoir capter les courants marins franchement alternatifs, mais circulant dans des directions bien définies. Pour cet emploi, il devrait être équipé d'une turbine à fonctionnement réversible.

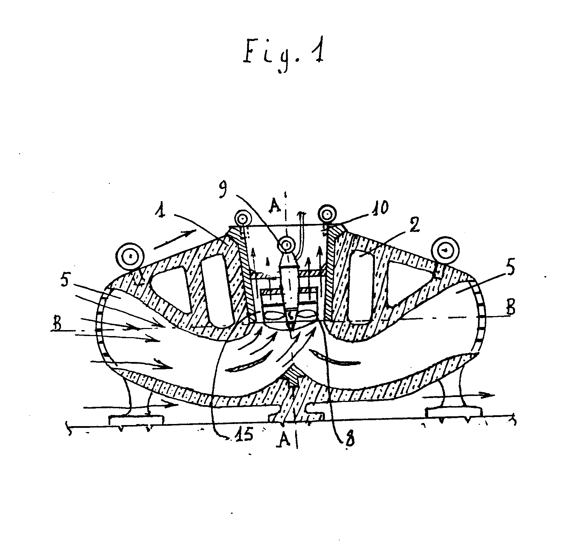

Afin d'obtenir un meilleur fonctionnement de la turbine 9 de chacun des dispositifs entrant dans le cadre de cette invention, il est prévu, et cela dans le but de limiter les remous et les tourbillons de la veine liquide à l'entrée et à la sortie du venturi 8, et de diminuer le risque d'apparition du phénomène de la cavitation, de disposer concentriquement, autour et extérieurement au venturi 8, un passage annulaire 15, figures 8, 9 et 10, se trouvant à l'intérieur, et à la sortie du capteur 5, de façon à permettre :
- d'une part, à la plus grande partie du volume de la veine liquide, traversant le capteur 5, de pénétrer dans le venturi 8, pour agir sur les pales de la turbine 9
- d'autre part, à l'autre partie (beaucoup moins importante) du volume de la veine liquide traversant le capteur 5 et constituant la partie périphérique de l'ensemble de la veine liquide, de déboucher en aval du venturi 8 et à la périphérie interne du diffuseur 10.

Cette particularité favorise la création d'une zone de dépression, avec effet venturi, à la sortie du venturi 8, et autour de la veine liquide ayant traversé celui-ci, et améliore de ce fait, le rendement de la turbine 9.

Par ailleurs, il est indiqué en outre, que les entrées du capteur 5, et la sortie du diffuseur 10, sont pourvues d'un bouclier alvéole à grandes mailles, destiné à les protéger contre les effets de la houle et des corps étrangers, au milieu marin ou fluvial.

La mise en oeuvre de chacun des groupes de production d'électricité décrits ci-dessus, est la suivante. Dès sa construction en cale sèche, le groupe en question est mis à flot et est remarqué sur le lieu choisi pour son immersion. A la verticale du lieu choisi, ses caissons sont en partie remplis d'eau, afin de permettre une immersion lente et contrôlée, à l'aide d'un puissant portique de marine et d'hommes grenouilles chargés de diriger la manoeuvre. Lorsque l'immersion est terminée et que le groupe repose sur le fond marin, ou le fond fluvial, les caissons sont remplis complètement d'eau pour donner du poids à l'ensemble et une plus grande résistance aux effets des courants. Ensuite, après ces opérations, il est procédé à la mise en place de la turbine dans son logement, à l'aide d'élingues et d'un engin de levage, puis à sa mise en fonctionnement après avoir effectué la connexion de l'alternateur de la turbine avec le câble électrique sous-marin.

Pour le remplacement de la turbine, l'opération inverse est réalisée sans poser de problèmes particuliers.

La quantité d'énergie susceptible d'être captée par un groupe est fonction :

a) du choix du site sur lequel est immergé le groupe

b) de la surface de la section de l'entrée du capteur hydraulique exposée perpendiculairement à la direction d'où viennent les courants

c) de la vitesse des courants. Celle-ci devrait être comprise entre trois et cinq noeuds

d) de la durée des courants dans le temps.

Quant à la puissance susceptible d'être recueillie par les différents types de groupes décrits ci-dessus, elle devrait s'échelonner entre 100 Kilowatts pour les groupes de faible importance, immergés dans les lits de rivières et des torrents, et de 1000 Kilowatts, pour ceux immergés dans les lits de fleuves (à courants rapides), ou en milieu marin.

## Revendications

1) Dispositif permettant de capter l'énergie cinétique des courants marins et celle des courants fluviaux, pour produire de l'électricité au moyen d'une turbine du type " bulbe ". Il est basé sur l'application du théorème de Bernoulli, et sur l'utilisation d'ajutages coniques et convergents, combinés avec la mise en oeuvre d'une turbine et d'un venturi.

Il est essentiellement constitué par un bati, (1) dans lequel, il a été aménagé un capteur hydraulique (5) comportant un faisceau de canaux coniques, (6) circulaires, ou partiellement circulaires, caractérisé, en ce que, le bati (1) est conçu pour être immergé et pour reposer directement et profondément sur un fond marin, ou dans le lit d'un fleuve, et en ce que, le capteur (5) débouche dans au moins, un venturi central (8), disposé verticalement et recourbé à quatre vingt dix degrés par rapport à l'entrée des canaux dont la sortie est orientée vers le haut ou vers le bas, et il est ainsi, destiné à capter les courants marins, tous azimuts ou les courants fluviaux.

2) Dispositif selon la revendication 1, caractérisé en ce que, le bati (1) est en béton ou en autre matériau, qu'il comporte des pieds (3) et des caissons étanches (2) lui permettant de flotter, d'être immergé en remplissant d'eau ses caissons, ou d'être remis à flot en vidant ceux-ci, comme cela se passe dans le sous-marin, et qu'il est pourvu d'anneaux (4) destinés à fixer des élingues pour faciliter les manoeuvres de son immersion ou de sa remise à flot, au moyen d'un portique de marine.

3) Dispositif selon les revendications 1 et 2, caractérisé en ce que, lorsque le capteur hydraulique (5) est destiné à capter les courants marins, tous azimuts, il est incorporé à un bati (1) de forme cylindrique et il est compartimenté en secteurs circulaires, caractérisés en ce que, ces secteurs sont de trente degrés déterminant des canaux convergents (6) vers un venturi commun (8). Chaque canal ainsi défini est caractérisé en ce que, il est également compartimenté verticalement en secteurs circulaires de quinze degrés, (7) de façon à modifier l'angle de convergence de chaque ajutage conique.

4) Dispositif selon les revendications 1 et 2, caractérisé en ce que, lorsque le capteur hydraulique (5) est destiné à capter les courants marins giratoires ou alternatifs circulant dans des directions bien définies, il est équipé de deux turbines (9) placées perpendiculairement à la direction des courants. Cette conception à deux turbines offre la particularité de présenter face aux courants une plus grande surface utile de captage.

5) Dispositif selon les revendications 1 et 2, caractérisé en ce que, lorsque le capteur hydraulique (5) est destiné à capter les courants fluviaux, il comporte une entrée réduite à une section circulaire de trente à quarante degrés environ se rapportant à la direction d'où vient le courant, et en ce que, cette entrée débouche dans un faisceau de trois canaux, (6) au moins qui convergent vers un venturi vertical (8) aménagé à l'intérieur du bati, (1) de façon telle, que le plan du centre de gravité (G') de la veine liquide traversant le venturi (8) et agissant sur les pales de la turbine (9) se situe en dessous, ou sur le même plan, que celui du centre de gravité (G) de la veine liquide, traversant l'entrée de la section du capteur, (5) cela dans le but de réduire le plus possible la perte de charge de la puissance, de la veine liquide, entre l'entrée du capteur (5) et la sortie du venturi (8).

6) Dispositif selon la revendication 1 et l'une quelconque des revendications de 3 à 5 caractérisé en ce que, la turbine (9) est mise en œuvre ou remplacée pendant l'immersion du dispositif, au moyen d'un engin de levage de marine.

7) Dispositif selon l'une quelconque des revendications précédentes, caractérisé, en ce que, lorsque le capteur hydraulique (5) est destiné à capter les courants dans les cours d'eaux, peu profonds (type torrent), l'entrée du capteur (5) et la sortie du diffuseur (10) sont disposées dans le bati (1), de façon diamétralement opposée, sur le même plan, et dans l'axe de la turbine (9).

8) Dispositif, selon l'une quelconque des revendications précédentes caractérisé, en ce que, autour et extérieurement au venturi (8), est disposé, concentriquement, un passage annulaire (15), se trouvant à l'intérieur et à la sortie du capteur (5), de manière à assurer le passage d'un anneau liquide, limitant les remous, les
tourbillons et la cavitation, et de plus, favorisant la création
d'une zone de dépression à la sortie du venturi (8), et autour de
la veine liquide ayant traversé celui-ci.

Fig.1

Fig.2

Fig.3

2/3

0002995

Fig. 4

Fig. 5

Fig. 6

Fig. 7

## Fig.8

## Fig.9

## Fig.10

Fig. 1

| DOCUMENTS CONSIDERES COMME PERTINENTS | | | CLASSEMENT DE LA DEMANDE (Int. Cl.²) |
|---|---|---|---|
| Catégorie | Citation du document avec indication, en cas de besoin, des parties pertinentes | Revendication concernée | |
| | <u>FR – A – 1 310 874</u> (CRISPIS)<br>* Page 2, à gauche, lignes 38, 39; résumé; figure 10 *<br><br>-- | 1 | F 03 B 13/10<br>17/06 |
| | <u>FR – A – 543 170</u> (CHANARD)<br>* Page 2, lignes 60-63; ligne 81; figure 2 *<br><br>-- | 1 | |
| | <u>US – A – 4 025 220</u> (THOMPSON)<br>* Colonne 1, lignes 49-56; colonne 3, lignes 5-51 *<br><br>-- | 7,8 | **DOMAINES TECHNIQUES RECHERCHES (Int. Cl.²)**<br><br>F 03 B<br>F 03 D |
| | <u>US – A – 3 986 787</u> (MOUTON)<br>* Colonne 6, lignes 21-66; colonne 13, lignes 11-38 *<br><br>-- | 7,8 | |
| | <u>US – A – 1 476 229</u> (SUESS)<br>* Page 1, lignes 57-63 *<br><br>-- | 7 | |
| | <u>FR – A – 2 350 476</u> (CHAPPELL)<br>* Page 3 *<br><br>-- | 7 | **CATEGORIE DES DOCUMENTS CITES** |
| A | <u>US – A – 4 017 205</u> (BOLIE)<br>* Colonne 3, lignes 13-26 *<br><br>-- | | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| A | <u>FR – A – 1 011 132</u> (HECQUET)<br>* Page 2, à gauche, dernier alinéa à deuxième alinéa à droite * | | &: membre de la même famille, document correspondant |
| | Le présent rapport de recherche a été établi pour toutes les revendications | | |

| Lieu de la recherche | Date d'achèvement de la recherche | Examinateur |
|---|---|---|
| La Haye | 06-03-1979 | DELL |

OEB Form 1503.1   06.78